# EUROPEAN PATENT APPLICATION

(11) **EP 4 832 470 A1**
(43) Date of publication of application: **28.10.2026**
(21) Application number: 26173796.9
(22) Date of filing: 21.04.2026
(51) Int. Cl.: H04N 1/00, G06F 3/044

(54) **OPERATION APPARATUS AND METHOD FOR CONTROLLING OPERATION APPARATUS**

(30) Priority: 25.04.2025 JP 2025073086
(71) Applicant: KYOCERA Document Solutions Inc., Osaka-shi, Osaka 540-8585 (JP)
(72) Inventor: Takiguchi, Fumiaki, Osaka-shi, 540-8585 (JP)
(74) Representative: Plougmann Vingtoft a/s

(57) **Abstract**

An operation apparatus includes a detection processor and a first comparison processor. The detection processor detects a quantity of electricity (a voltage level) that varies according to an operation received on a touchscreen, and detects the operation on the basis of the detected quantity of electricity. The first comparison processor compares the quantity of electricity detected during operation with a first reference quantity of electricity used as a reference for the quantity of electricity during operation.

## Description

### INCORPORATION BY REFERENCE

This application is based upon and claims the benefit of priority from the corresponding Japanese Patent Application No. 2025-073086 filed on April 25, 2025, the entire contents of which are incorporated herein by reference.

The present disclosure relates to an operation apparatus and a method for controlling the operation apparatus.

### BACKGROUND

A touchscreen that displays thereon an operation button is known as a related technology. In the case of the touchscreen, when the number of times that the operation button is touched exceeds a specified number of times, a display position for the operation button is changed to a space that has not been touched by a user yet.

### SUMMARY

An operation apparatus according to an aspect of the present disclosure includes a detection processor and a first comparison processor. The detection processor detects a quantity of electricity that varies according to an operation received on a touchscreen, and detects the operation on the basis of the detected quantity of electricity. The first comparison processor compares the quantity of electricity detected during operation with a first reference quantity of electricity used as a reference for the quantity of electricity during operation.

A method for controlling an operation apparatus according to another aspect of the present disclosure includes detecting a quantity of electricity that varies according to an operation received on a touchscreen, and detecting the operation on the basis of the detected quantity of electricity. The method for controlling the operation apparatus includes comparing the quantity of electricity detected during operation with a first reference quantity of electricity used as a reference for the quantity of electricity during operation.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a schematic block diagram illustrating a configuration of an image forming apparatus according to embodiments;
Fig. 2 schematically illustrates an appearance of the image forming apparatus according to the embodiments;
Fig. 3 is a diagram used to describe a deterioration in a touchscreen included in a display apparatus according to the embodiments;
Fig. 4 is a diagram used to describe a first example of adjusting an operation apparatus according to the embodiments;
Fig. 5 is a diagram used to describe a second example of adjusting the operation apparatus according to the embodiments;
Fig. 6 is a diagram used to describe an example of an operation screen in a third example of adjusting the operation apparatus according to the embodiments;
Fig. 7 is a diagram used to describe another example of the operation screen in the third example of adjusting the operation apparatus according to the embodiments;
Fig. 8 is a flowchart of an example of how the operation apparatus according to the embodiments works during operation; and
Fig. 9 is a flowchart of an example of how the operation apparatus according to the embodiments works during non-operation.

### DETAILED DESCRIPTION

Embodiments of the present disclosure will now be described below with reference to the accompanying drawings. The following embodiments are merely examples in which the present disclosure is embodied, and are not intended to limit the scope of the present disclosure.

### 1. Overall Configuration of Image Forming Apparatus

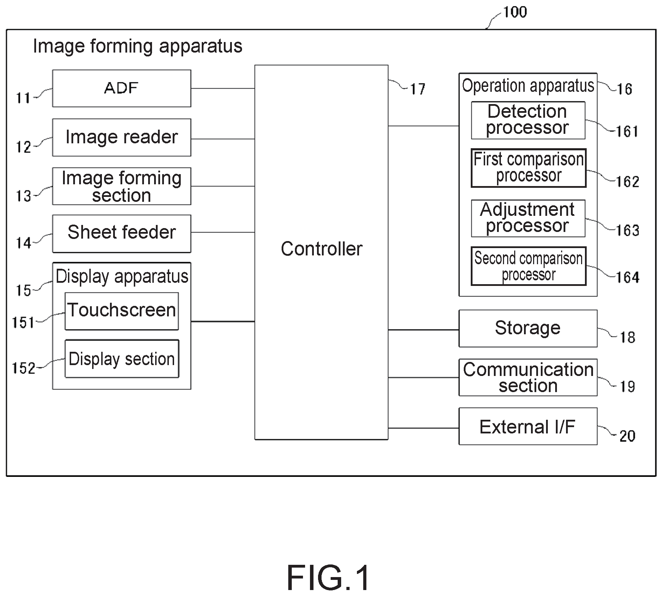

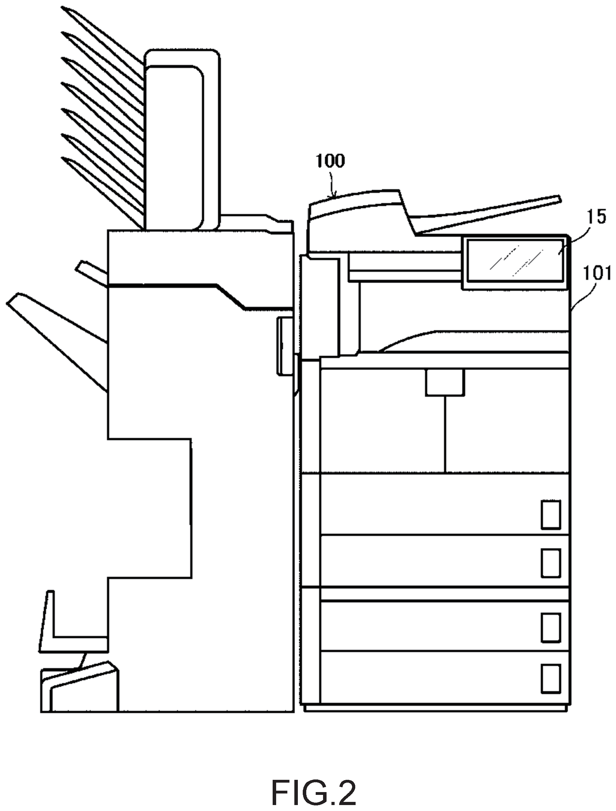

First, an overall configuration of an image forming apparatus 100 according to the present embodiment is described with reference to Figs. 1 and 2.

An example of the image forming apparatus 100 according to the present embodiment is a multifunctional device that includes a plurality of functions such as a scanning function to acquire image data from a document, a printing function to form an image on the basis of image data, a facsimile function, and a copying function. It is only required that the image forming apparatus 100 include an image processing function that includes at least one of a function to form an image, or a function to acquire image data, and the image forming apparatus 100 may be, for example, a printer, a scanner, a facsimile apparatus, or a copying machine.

As illustrated in Fig. 1, the image forming apparatus 100 includes an auto document transportation apparatus 11, an image reader 12, an image forming section 13, a sheet feeder 14, a display apparatus 15, an operation apparatus 16, a controller 17, a storage 18, a communication section 19, and an external interface 20. The auto document transportation apparatus 11 is an auto document feeder (ADF). Thus, the auto document transportation apparatus 11 is referred to as "ADF" in Fig. 1, and is hereinafter also referred to as the "ADF 11." Further, the external interface 20 is an external I/F (interface). Thus, the external interface 20 is referred to as an "external I/F" in Fig. 1, and is hereinafter also referred to as the "external I/F 20."

In the present embodiment, the image forming apparatus 100 includes a body 101, as illustrated in Fig. 2. All of the ADF 11, the image reader 12, the image forming section 13, the sheet feeder 14, the display apparatus 15, the operation apparatus 16, the controller 17, the storage 18, the communication section 19, and the external I/F 20 are provided to the body 101.

The ADF 11 transports a document read by the image reader 12 to obtain an image of the document. The ADF 11 includes, for example, a document setting portion, a plurality of transportation rollers, a document holding portion, and a sheet discharge portion.

The image reader 12 reads a document to obtain an image of the document, and outputs image data corresponding to the image obtained by the reading. The image reader 12 includes, for example, a platen, a light source, a plurality of mirrors, an optical lens, and a charge-coupled device (CCD).

The image forming section 13 forms an image on a sheet by electrophotography on the basis of image data output by the image reader 12. Further, the image forming section 13 forms an image on a sheet on the basis of image data input by an information processing apparatus, such as a personal computer, that is external to the image forming apparatus 100. The image forming section 13 includes, for example, four image forming units that respectively correspond to four colors that are cyan (C), magenta (M), yellow (Y), and black (K), a light scanning apparatus, an intermediate transfer belt, a secondary transfer roller, and a fixation apparatus. The image forming section 13 may form an image on a sheet by an image formation approach, such as ink-jetting, that is other than electrophotography.

The image forming section 13 forms an image on a sheet using toner as developer. When the image forming section 13 forms an image by ink-jetting, ink (another example of developer) is supplied instead of toner. Examples of the toner supplied to the image forming section 13 include tonners of multiple colors that are cyan (C), magenta (M), yellow (Y), and black (K). The sheet on which an image has been formed by the image forming section 13 is discharged (supplied) to, for example, an expansion apparatus for post-processing.

The sheet feeder 14 supplies a sheet to the image forming section 13. The sheet feeder 14 includes, for example, a sheet cassette, a manual feeding tray, a sheet transportation path, and a plurality of transportation rollers. The image forming section 13 forms an image on a sheet supplied by the sheet feeder 14. Examples of the sheet supplied to the image forming section 13 include paper. However, the sheet is not limited to paper, and may be, for example, a resin film.

The display apparatus 15 is a user interface, in the image forming apparatus 100, that is used to present (display) information to a user. The display apparatus 15 includes a touchscreen 151 and a display section 152.

The touchscreen 151 is, for example, a resistive touchscreen, and has, for example, a two-layer structure including two transparent films or glass substrates. A transparent electrode made of indium tin oxide (ITO) is formed in each of the two transparent films or glass substrates, and the two transparent films or glass substrates are bonded such that the respective transparent electrodes face each other. One of the two transparent electrodes is included in an X coordinate circuit used to detect an X coordinate of an operation position, and another of the transparent electrodes is included in a Y coordinate circuit used to detect a Y coordinate of the operation position. When the user presses any position on the touchscreen 151, the touchscreen 151 outputs an electric signal corresponding to the position (X coordinate, Y coordinate).

The display section 152 is arranged behind the touchscreen 151, and displays thereon various information in response to a control instruction being given by the controller 17. In the present embodiment, the display section 152 includes, for example, a liquid crystal display, and displays a display screen including various information on the liquid crystal display. Further, in the present embodiment, a set of coordinates on the display screen displayed on the display section 152 and a set of coordinates on the touchscreen 151 correspond to each other one-to-one. Thus, when the user presses any position on the touchscreen 151 and when coordinates of the pressed position on the touchscreen 151 are represented by (x1, y1), coordinates on the display screen displayed on the display section 152 are also represented by (x1, y1).

The operation apparatus 16 is a user interface used to receive an operation performed by the user on the touchscreen 151. For example, the operation apparatus 16 receives various operations performed by the user in response to an electric signal output by the touchscreen 151 of the display apparatus 15. Further, when the operation apparatus 16 includes, for example, a switch, a key, or a numeric keypad, the operation apparatus 16 receives various operations performed by the user in response to an electric signal output by the switch, the key, or the numeric keypad being pressed.

The operation apparatus 16 primarily includes a computer system including at least one processor and at least one memory, and functions of the operation apparatus 16 are provided by the at least one processor executing a program. In the present embodiment, the operation apparatus 16 includes, for example, a central processing unit (CPU). The program may be recorded on the at least one memory in advance, or may be provided through a telecommunications line such as the Internet. Alternatively, the program may be provided by being recorded on a non-transitory recording medium, such as a memory card or an optical disc, that is readable by a computer system. The at least one processor includes at least one electronic circuit including a semiconductor integrated circuit. Further, the computer system described herein includes a microcontroller including at least one processor and at least one memory.

Further, as user interfaces, the image forming apparatus 100 may include, for example, a sound output section and a sound input section in addition to the display apparatus 15 and the operation apparatus 16.

The controller 17 primarily includes a computer system including at least one processor and at least one memory, and performs overall control on the image forming apparatus 100. In the image forming apparatus 100, functions of the controller 17 are provided by the at least one processor executing a program. In the present embodiment, the controller 17 includes, for example, a CPU.

The program may be recorded on the at least one memory in advance, or may be provided through a telecommunications line such as the Internet. Alternatively, the program may be provided by being recorded on a non-transitory recording medium, such as a memory card or an optical disc, that is readable by a computer system. The at least one processor includes at least one electronic circuit including a semiconductor integrated circuit. Further, the computer system described herein includes a microcontroller including at least one processor and at least one memory. The controller 17 may be a controller that is provided independently of a primary controller that performs overall control on the image forming apparatus 100.

The storage 18 has stored therein information regarding, for example, a control program used to cause the operation apparatus 16 and the controller 17 to perform various processes. In the present embodiment, the storage 18 includes at least one nonvolatile memory such as a read only memory (ROM), a hard disk (HDD), or a solid state disk (SSD). Further, the storage 18 may include at least one volatile memory such as a random access memory (RAM).

The communication section 19 is an interface used to perform data communication between the image forming apparatus 100 and an external system connected through a communication network such as the Internet or a local area network (LAN). The data communication may be wired communication or wireless communication. Further, the data communication may be wireless communication in conformity with short-range-wireless-communication standards such as near-field communication (NFC) (registered trademark) or Bluetooth (registered trademark).

The external I/F 20 includes a port through which an external memory or an external apparatus is connected to the external I/F 20, and is an interface used to perform data communication with the external memory or external apparatus connected through the port. In the present embodiment, the external memory includes, for example, a Universal Serial Bus (USB) memory. Further, the external apparatus includes, for example, a device that supports a USB mass storage.

A touchscreen that displays thereon an operation button is known as a related technology. In the case of the touchscreen, when the number of times that the operation button is touched exceeds a specified number of times, a display position for the operation button is changed to a space that has not been touched by a user yet.

It is difficult for the touchscreen (an operation apparatus) described as the related technology above to detect a reduction in the accuracy in detecting operations that is caused due to a deterioration in the touchscreen.

Specifically, for example, it is known that a resistance value of a resistive film in a resistive touchscreen is changed due to, for example, the number of times that the touchscreen is pressed or an age-based deterioration in the touchscreen. Further, when the resistance value of the resistive film in the touchscreen is changed, a voltage level used to detect coordinates of an operation position is shifted from the voltage level in a normal state. This results in preventing the operation position from being detected precisely. When the operation position is not detected precisely, as described above, there will be a need to replace the touchscreen if no measures are taken in particular.

The issue described above may also occur in a capacitive touchscreen. In a capacitive touchscreen, a change in capacitance used to detect an operation position is shifted from the change in the capacitance in a normal state due to, for example, the number of times that the touchscreen is pressed or an age-based deterioration in the touchscreen. This results in preventing the operation position from being detected precisely.

On the other hand, in the present embodiment, processing that is described below and performed by the operation apparatus 16 makes it possible to provide the operation apparatus 16 and a method for controlling the operation apparatus 16, the operation apparatus 16 making it possible to detect a reduction in the accuracy in detecting operations that is caused due to a deterioration in a touchscreen.

### 2. Configuration of Operation Apparatus

Each functional section included in the operation apparatus 16 is described in more detail with reference to Fig. 1. The operation apparatus 16 includes a detection processor 161, a first comparison processor 162, an adjustment processor 163, and a second comparison processor 164. In other words, the image forming apparatus 100 includes the detection processor 161, the first comparison processor 162, the adjustment processor 163, and the second comparison processor 164 as a function of the operation apparatus 16.

The detection processor 161 detects a quantity of electricity that varies according to an operation received on the touchscreen 151, and detects the operation on the basis of the detected quantity of electricity. Specifically, the detection processor 161 applies voltage to the two transparent electrodes of the touchscreen 151 alternately. When a user presses any position on the touchscreen 151, voltage corresponding to an X coordinate of the pressed position is generated in the transparent electrode included in the X coordinate circuit. Then, the detection processor 161 detects a voltage level (a quantity of electricity) by acquiring an electric signal (here, a voltage signal) output by the touchscreen 151, and detects, on the basis of the detected voltage level, an X coordinate that is situated on the touchscreen 151 and at which the operation is received. On the other hand, voltage corresponding to a Y coordinate of the pressed position is generated in the transparent electrode included in the Y coordinate circuit. Then, the detection processor 161 detects a voltage level (a quantity of electricity) by acquiring the electric signal (here, the voltage signal) output by the touchscreen 151, and detects, on the basis of the detected voltage level, a Y coordinate that is situated on the touchscreen 151 and at which the operation is received.

As described above, the detection processor 161 detects a quantity of electricity (here, a voltage level) that varies according to an operation received on the touchscreen 151, and detects, on the basis of the detected voltage level, coordinates that are situated on the touchscreen 151 and at which the operation is received. As a result, the detection processor 161 detects an operation corresponding to the detected coordinates.

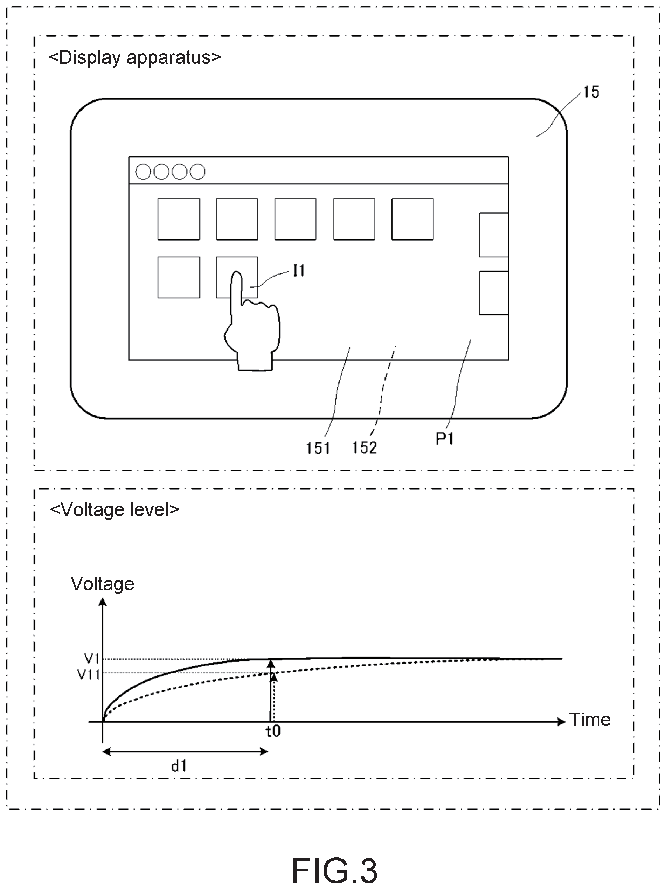

Here, the voltage output by the touchscreen 151 has the property of gradually increasing after a user starts pressing the touchscreen 151 and of exhibiting a substantially constant value when a specified period of time has elapsed since the start of pressing, as illustrated in <Voltage level> in Fig. 3. In other words, the quantity of electricity (here, the voltage level) has the property of varying over time after an operation is received on the touchscreen 151. Thus, the detection processor 161 detects the quantity of electricity obtained when a specific period of time d1 (also referred to as a sampling time) has elapsed since the quantity of electricity (here, the voltage level) started varying. This makes it possible to detect coordinates that are situated on the touchscreen 151 and at which an operation is received, on the basis of the quantity of electricity exhibiting a substantially constant value. This makes it possible to improve the accuracy in detecting the coordinates, compared to when the coordinates are detected on the basis of the quantity of electricity, which is varying over time.

The first comparison processor 162 compares a quantity of electricity (here, a voltage level) detected when the user is performing operation with a first reference quantity of electricity (here, a reference voltage level) used as a reference for the quantity of electricity when the user is performing operation. Specifically, the first comparison processor 162 compares a voltage level at coordinates that are situated on the touchscreen 151 and at which the operation is received, with a reference voltage level at the coordinates. The reference voltage level is stored in, for example, the storage 18 in advance for each set of coordinates. This makes it possible to detect a reduction in the accuracy in detecting operations that is caused due to a deterioration in the touchscreen 151.

A reduction in the accuracy in detecting operations that is caused due to a deterioration in the touchscreen 151 is described below with reference to Fig. 3. Fig. 3 illustrates, in <Display apparatus>, a state in which a user is performing an operation of pressing an icon I1 on an operation screen P1 displayed on the display section 152. The operation screen P1 is a screen used to receive various operations performed by the user. Note that, when the user presses any position on the operation screen P1 and when coordinates of the pressed position (hereinafter referred to as an "operation position") on the operation screen P1 are represented by (x10, y10), a position, on the touchscreen 151, that corresponds to coordinates of (x10, y10) is pressed.

Fig. 3 illustrates, in <Voltage level>, a voltage signal output by the touchscreen 151 when the operation position on the touchscreen 151 is pressed. Here, the voltage signal is, for example, a voltage signal output by the transparent electrode included in the X coordinate circuit. Further, in <Voltage level> in Fig. 3, a graph with a solid line represents a voltage signal in a normal state in which a portion being included in the touchscreen 151 and corresponding to the operation position is not deteriorated. Further, a graph with a dashed line represents a voltage signal in a deterioration state in which the portion being included in the touchscreen 151 and corresponding to the operation position is deteriorated.

As illustrated in <Voltage level> in Fig. 3, when the touchscreen 151 is in the normal state, the detection processor 161 detects coordinates of the operation position on the touchscreen 151 on the basis of "V1", which is a voltage level at a point in time t0 that is reached when a specific period of time d1 has elapsed since the voltage level started varying. However, when there is a deterioration in a portion being included in the touchscreen 151 and corresponding to the operation position, a degree of an increase in a voltage level of a voltage signal is lower than in the normal state of the touchscreen 151. Thus, when there is a deterioration in the portion being included in the touchscreen 151 and corresponding to the operation position, the voltage level at the point in time t0 is "V11", which is lower than "V1." Then, the detection processor 161 detects coordinates on the touchscreen 151 on the basis of the voltage level "V11." Thus, the detection processor 161 may detect coordinates of a position different from the operation position. As described above, the deterioration in the touchscreen 151 results in a reduction in the accuracy in detecting operations.

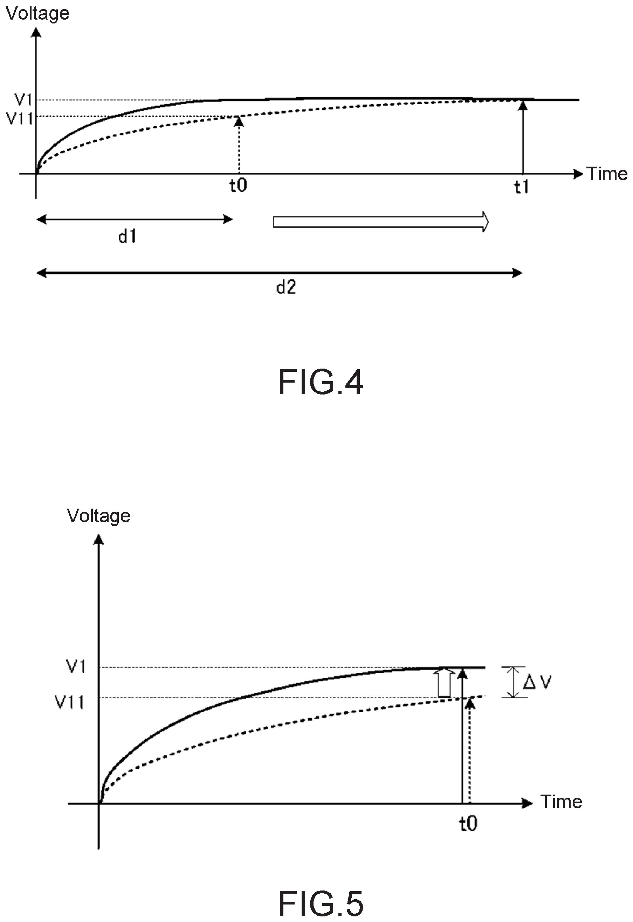

Thus, the first comparison processor 162 compares a voltage level at coordinates that are situated on the touchscreen 151 and at which an operation is received, with a reference voltage level at the coordinates. This enables the first comparison processor 162 to detect whether there is a deterioration in a portion being included in the touchscreen 151 and corresponding to the operation position. For example, the reference voltage level is set to be in a range in which coordinates of the operation position when the portion being included in the touchscreen 151 and corresponding to the operation position is in the normal state, can be detected. Then, when a difference ΔV (refer to Fig. 5) between the detected voltage level and the reference voltage level is less than or equal to a threshold, the first comparison processor 162 determines that the portion being included in the touchscreen 151 and corresponding to the operation position is not deteriorated. On the other hand, when the difference ΔV exceeds the threshold, the first comparison processor 162 can determine that the portion being included in the touchscreen 151 and corresponding to the operation position is deteriorated.

Here, the threshold is set to a certain value, where coordinates are not detected precisely by the detection processor 161 when the difference ΔV exceeds the certain value. Specifically, for example, the threshold is set to be a varying amount of voltage level that corresponds to several dots on the touchscreen 151.

According to a result of the comparison performed by the first comparison processor 162, the adjustment processor 163 adjusts a mode in which the detection processor 161 detects operations. Specifically, when the first comparison processor 162 determines that the portion being included in the touchscreen 151 and corresponding to the operation position is not deteriorated, the adjustment processor 163 keeps a current mode as the mode in which the detection processor 161 detects an operation performed on the portion. On the other hand, when the first comparison processor 162 determines that the portion being included in the touchscreen 151 and corresponding to the operation position is deteriorated, the adjustment processor 163 adjusts the mode in which the detection processor 161 detects the operation performed on the portion. This makes it possible to easily prevent a reduction in the accuracy in detecting operations even when the portion of the touchscreen 151 is deteriorated, and thus to prolong the life of the touchscreen 151.

In the present embodiment, the adjustment processor 163 adjusts, according to one of first to third adjustment examples listed below, the mode in which the detection processor 161 detects operations. The mode described above is adjusted for each set of coordinates detected by the detection processor 161. Note that the adjustment processor 163 may adjust the mode described above according to yet another adjustment example when a reduction in the accuracy in detecting operations is not prevented only using one of the first to third adjustment examples.

### <First Adjustment Example>

In the first adjustment example, the adjustment processor 163 makes a specific period of time longer when the difference ΔV between the quantity of electricity (here, a voltage level) detected by the detection processor 161 and the first reference quantity of electricity (here, a reference voltage level) exceeds a threshold. Specifically, it is assumed that a voltage level of an operation position at a point in time t0 that is reached when the specific period of time d1 has elapsed since the voltage level started varying is "V11", as illustrated in Fig. 4, and that the touchscreen 151 is determined to be deteriorated. In this case, the adjustment processor 163 changes the specific period of time from "d1" to "d2" to retard, from the point in time t0 to a point in time t1, a timing at which the detection processor 161 detects the voltage level, where "d1" is a current specific period of time.

As described above, the voltage output by the touchscreen 151 has the property of gradually increasing after a user starts pressing the touchscreen 151 and of exhibiting a substantially constant value when a specified period of time has elapsed since the start of pressing. Thus, the voltage level exhibiting a substantially constant value can be detected by retarding a timing at which the detection processor 161 detects the voltage level. Here, the detection processor 161 can detect, after adjustment, a voltage level of approximately "V1", which is a voltage level at the point in time t1. Thus, when there is a deterioration in a portion being included in the touchscreen 151 and corresponding to the operation position, the detection processor 161 can also detect coordinates of the portion of the touchscreen 151, as in the case in which the portion is in the normal state.

### <Second Adjustment Example>

In the second adjustment example, the adjustment processor 163 performs adjustment described below when the difference ΔV between the quantity of electricity (here, a voltage level) detected by the detection processor 161 and the first reference quantity of electricity (here, a reference voltage level) exceeds a threshold. In other words, the adjustment processor 163 corrects at least one of the quantity of electricity or the first reference quantity of electricity to decrease the difference ΔV. Specifically, it is assumed that a voltage level of an operation position at the point in time t0 that is reached when the specific period of time d1 has elapsed since the voltage level started varying is "V11", as illustrated in Fig. 5, and that the touchscreen 151 is determined to be deteriorated. In this case, the adjustment processor 163 adds the difference ΔV to the voltage level detected by the detection processor 161.

As a result, even when a voltage level actually detected by the detection processor 161 is "V11", the detection processor 161 can detect, after adjustment, operations on the basis of a voltage level of approximately "V1" that is obtained by adding the difference ΔV to the detected voltage level. Thus, when there is a deterioration in a portion being included in the touchscreen 151 and corresponding to the operation position, the detection processor 161 can also detect coordinates of the portion of the touchscreen 151, as in the case in which the portion is in the normal state. Further, in the second adjustment example, there is no need to retard the timing at which the detection processor 161 detects the voltage level, which is different from the first adjustment example. This also provides an advantage in that a response to an operation performed by a user is not delayed.

Note that the adjustment processor 163 adds the difference ΔV to the voltage level detected by the detection processor 161, although the present disclosure is not limited thereto. For example, the adjustment processor 163 may add, to the voltage level detected by the detection processor 161, a value obtained by multiplying the difference ΔV by a specified correction coefficient.

Further, the adjustment processor 163 may subtract the difference ΔV from the reference voltage level. In this case, after adjustment, the reference voltage level is decreased by the difference ΔV although the voltage level actually detected by the detection processor 161 is "V11", which is smaller than "V1" by the difference ΔV. Thus, when there is a deterioration in a portion being included in the touchscreen 151 and corresponding to the operation position, the detection processor 161 can also detect coordinates of the portion of the touchscreen 151, as in the case in which the portion is in the normal state.

### <Third Adjustment Example>

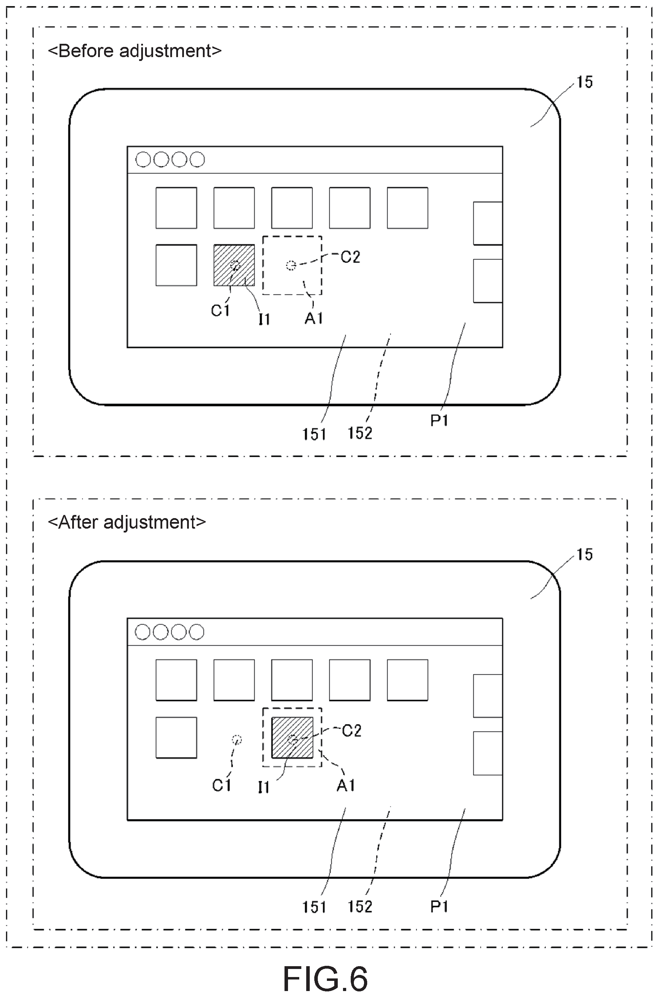

In the third adjustment example, the adjustment processor 163 performs adjustment described below when the difference ΔV between the quantity of electricity (here, a voltage level) detected by the detection processor 161 at specific coordinates on the touchscreen 151, and the first reference quantity of electricity (here, a reference voltage level) exceeds a threshold. In other words, the adjustment processor 163 changes a position of specific coordinates C1. Specifically, it is assumed that a position of the icon I1 on the operation screen P1 (that is, the position of the icon I1 on the touchscreen 151) is represented by the specific coordinates C1 (x10, y10), as illustrated in <Before adjustment> in Fig. 6. In this case, the adjustment processor 163 changes a position of the specific coordinates C1 (x10, y10) to a position of coordinates C2 (x11, y11) that is different from the position of the icon I1.

Thus, after adjustment, the detection processor 161 can detect, as an operation corresponding to specific coordinates, an operation received on a portion with a relatively low degree of deterioration. This makes it possible to easily prevent a reduction in the accuracy in detecting an operation corresponding to specific coordinates before adjustment on the touchscreen 151 even when a portion being included in the touchscreen 151 and corresponding to the specific coordinates is deteriorated, and thus to prolong the life of the touchscreen 151.

Here, when the position of specific coordinates on the touchscreen 151 is changed but the position of the icon I1 is not changed, an operation corresponding to the specific coordinates is not performed in spite of the fact that a user performs an operation of pressing the icon I1. Thus, the adjustment processor 163 changes a position of a specific receiving portion concurrently with the change in the position of the specific coordinates. The specific receiving portion is displayed at a position, on the display section 152, that corresponds to the specific coordinates, and is a portion that receives a specific operation. Here, the icon I1 displayed at a position corresponding to the specific coordinates before adjustment corresponds to the specific receiving portion. This results in changing the position of the specific receiving portion together with the position of the specific coordinates. Thus, after adjustment, the operation corresponding to the specific coordinates can be performed by the user performing the operation of pressing the icon I1.

Specifically, the adjustment processor 163 changes the position of the icon I1 on the operation screen P1 from the position of the specific coordinates C1 (x10, y10) before adjustment to a position of specific coordinates C2 (x11, y11) after adjustment, as illustrated in <After adjustment> in Fig. 6. Accordingly, the position of the specific coordinates after adjustment and the position of the icon I1 after adjustment coincide.

Here, in the example illustrated in Fig. 6, the adjustment processor 163 changes the position of the specific coordinates to a position, on the touchscreen 151, that corresponds to a first non-display region A1 and at which the difference ΔV is less than or equal to a threshold. The first non-display region A1 is a region in which a reception portion that receives an operation is not displayed on a screen (here, the operation screen P1) that displays thereon the specific receiving portion (here, the icon 11). Specifically, the first non-display region A1 is a region in which, for example, an icon is not displayed on the operation screen P1, as illustrated in <Before adjustment> in Fig. 6.

Operation is less likely to be performed by a user in the first non-display region A1 at least on the operation screen P1. Thus, it is conceivable that a portion of the touchscreen 151 that corresponds to the first non-display region A1 could not be much deteriorated, compared with a portion of the touchscreen 151 that corresponds to the icon I1 serving as the specific receiving portion. Thus, as illustrated in <After adjustment> in Fig. 6, the position of the specific coordinates and the position of the icon I1 are respectively changed to positions that correspond to the first non-display region A1 and at which the difference ΔV is less than or equal to a threshold. This makes it possible to easily prevent a reduction in the accuracy in detecting an operation corresponding to specific coordinates.

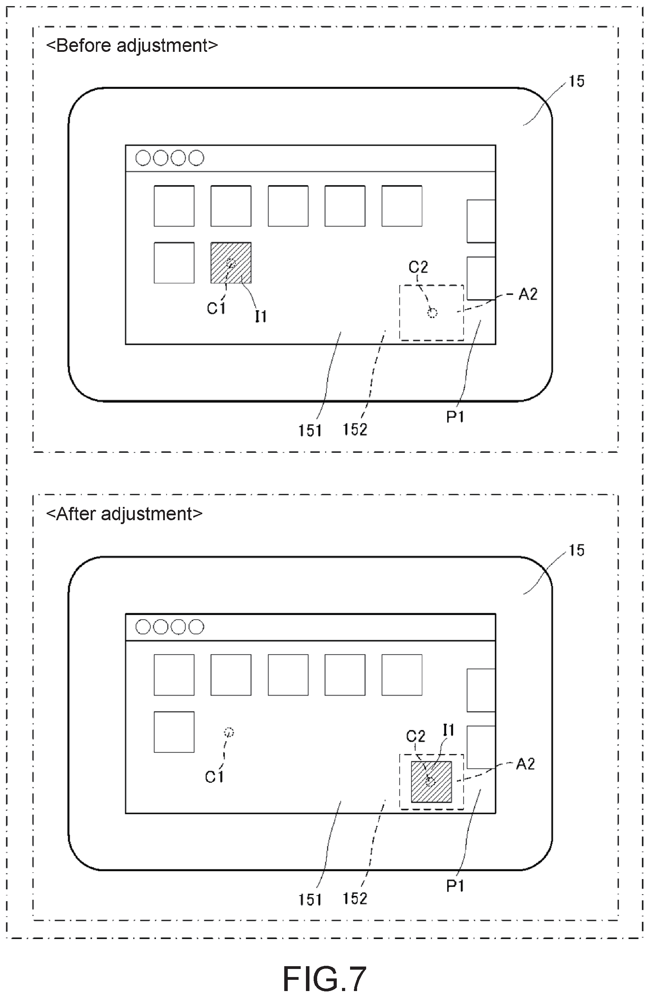

Further, on the touchscreen 151, the adjustment processor 163 may change the position of specific coordinates to not only a position that corresponds to the first non-display region A1 but also, for example, a position that corresponds to a second non-display region A2 illustrated in Fig. 7. The second non-display region A2 is a region in which a reception portion that receives an operation is not displayed on any of a plurality of screens when the display section 152 is changeable for the plurality of screens. Specifically, as illustrated in <Before adjustment> in Fig. 7, the second non-display region A2 is a region in which, for example, an icon is not displayed on the operation screen P1, and is a region in which, for example, an icon is not displayed on any of the screens other than the operation screen P1.

Operation is less likely to be performed by the user in the second non-display region A2 on all of the screens. Thus, it is conceivable that a portion of the touchscreen 151 that corresponds to the second non-display region A2 could not be much deteriorated, compared to the first non-display region A1. Thus, as illustrated in <After adjustment> in Fig. 7, the position of the specific coordinates and the position of the icon I1 are respectively changed to positions that correspond to the second non-display region A2. This makes it possible to more easily prevent a reduction in the accuracy in detecting an operation corresponding to specific coordinates.

In the present embodiment, the adjustment processor 163 adjusts, when a user is performing operation, the mode in which the detection processor 161 detects operations, although the present disclosure is not limited thereto. In the present embodiment, according to a result of comparison that is performed by the second comparison processor 164 and described below, the adjustment processor 163 can also adjust, when the user is not performing operation, the mode in which the detection processor 161 detects operations.

The second comparison processor 164 compares a quantity of electricity detected when a user is not performing operation with a second reference quantity of electricity used as a reference for the quantity of electricity when the user is not performing operation. Here, the quantity of electricity corresponds to a resistance value of the touchscreen 151. The second reference quantity of electricity corresponds to a value used as a reference for the quantity of electricity when the user is not performing operation, and corresponds to a reference resistance value here. Here, a reference value of resistance between the X electrodes and a reference value of resistance between the Y electrodes are respectively stored in the storage 18 in advance as reference resistance values.

For example, when the touchscreen 151 is a four-wire touchscreen, a value of resistance between two X electrodes formed in one of two transparent electrodes can be calculated from current that flows between the two X electrodes, and voltage applied between the two X electrodes. Likewise, a value of resistance between two Y electrodes formed in another of the two transparent electrodes can be calculated from current that flows between the two Y electrodes, and voltage applied between the two Y electrodes.

Here, the detection processor 161 applies voltage between the two X electrodes to measure current that flows between the two X electrodes, and calculates a resistance value on the basis of the voltage and the current to detect a value of resistance between the two X electrodes. Likewise, the detection processor 161 applies voltage between the two Y electrodes to measure current that flows between the two Y electrodes, and calculates a resistance value on the basis of the voltage and the current to detect a value of resistance between the two Y electrodes.

Here, a resistance value of the touchscreen 151 (that is, at least one of the value of resistance between the two X electrodes or the value of resistance between the two Y electrodes) becomes larger according to a deterioration in the touchscreen 151. Thus, the second comparison processor 164 can detect whether there is a deterioration in the touchscreen 151 by comparing the resistance value of the touchscreen 151 with the reference resistance value. Specifically, when a difference ΔR between the detected resistance value of the touchscreen 151 and the reference resistance value is less than or equal to a threshold, the second comparison processor 164 determines that the touchscreen 151 is not deteriorated. On the other hand, when the difference ΔR exceeds the threshold, the second comparison processor 164 determines that the touchscreen 151 is deteriorated.

Then, according to a result of the comparison performed by the second comparison processor 164, the adjustment processor 163 adjusts the mode in which the detection processor 161 detects operations. Specifically, when the second comparison processor 164 determines that the touchscreen 151 is not deteriorated, the adjustment processor 163 keeps a current mode as the mode in which the detection processor 161 detects operations. On the other hand, when the second comparison processor 164 determines that the touchscreen is deteriorated, the adjustment processor 163 adjusts the mode in which the detection processor 161 detects operations. This makes it possible to easily prevent a reduction in the accuracy in detecting operations even when the touchscreen 151 is deteriorated, and thus to prolong the life of the touchscreen 151.

Note that the adjustment processor 163 adjusts the mode uniformly with respect to all of the sets of coordinates on the touchscreen 151, which is different from the case in which a user is performing operation. Specifically, the adjustment processor 163 makes a specific period of time longer with respect to all of the sets of coordinates on the touchscreen 151 according to the first adjustment example. As a result, the voltage level exhibiting a substantially constant value can be detected by retarding a timing at which the detection processor 161 detects the voltage level. Thus, when there is a deterioration in the touchscreen 151, the detection processor 161 can also detect coordinates precisely, as in the case in which the touchscreen 151 is in the normal state.

### 3. Examples of How Operation Apparatus Works

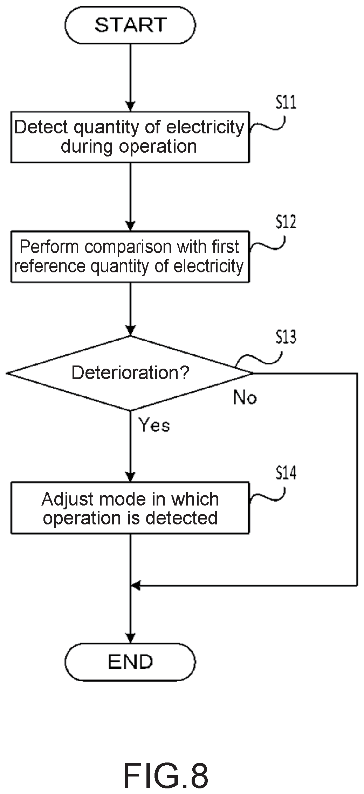

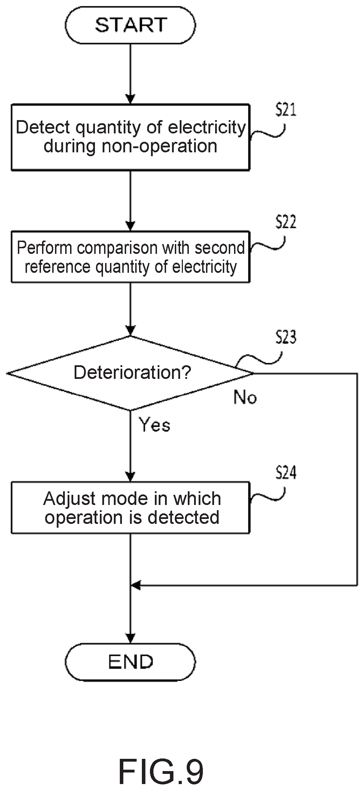

An example of a procedure of processing performed by the operation apparatus 16 and an example of a method for controlling the operation apparatus 16 according to the present embodiment are described with reference to Figs. 8 and 9. Here, Steps S11, S12, ... refer to numbers for a processing procedure (Steps) performed by the operation apparatus 16. First, processing performed by the operation apparatus 16 when a user is performing an operation on the touchscreen 151 is described with reference to Fig. 8.

### Step S11

First, the detection processor 161 of the operation apparatus 16 detects a quantity of electricity that varies according to an operation received on the touchscreen 151, that is, a quantity of electricity obtained when a user is performing operation, and detects the operation on the basis of the detected quantity of electricity. Here, the detection processor 161 detects a voltage level as the quantity of electricity obtained during operation, and detects, on the basis of the detected voltage level, coordinates that are situated on the touchscreen 151 and at which the operation is received. Accordingly, the detection processor 161 detects an operation corresponding to the detected coordinates.

### Step S12

The first comparison processor 162 of the operation apparatus 16 compares the quantity of electricity (here, a voltage level) detected when the user is performing operation with a first reference quantity of electricity (here, a reference voltage level) used as a reference for the quantity of electricity when the user is performing operation. This enables the first comparison processor 162 to detect whether there is a deterioration in a portion being included in the touchscreen 151 and corresponding to an operation position. Specifically, when a difference ΔV between the detected voltage level and the reference voltage level is less than or equal to a threshold, the first comparison processor 162 determines that the portion being included in the touchscreen 151 and corresponding to the operation position is not deteriorated. On the other hand, when the difference ΔV exceeds the threshold, the first comparison processor 162 determines that the portion being included in the touchscreen 151 and corresponding to the operation position is deteriorated.

### Step S13

When a result of the comparison performed by the first comparison processor 162 shows that the portion being included in the touchscreen 151 and corresponding to the operation position is deteriorated (Step S13: Yes), the operation apparatus 16 performs the process of Step S14. On the other hand, when the result of the comparison performed by the first comparison processor 162 shows that the portion is not deteriorated (Step S13: No), the operation apparatus 16 terminates the processing.

### Step S14

The adjustment processor 163 adjusts the mode in which the detection processor 161 detects operations. Here, the adjustment processor 163 adjusts, according to one of the first to third adjustment examples, the mode in which the detection processor 161 detects operations. This makes it possible to easily prevent a reduction in the accuracy in detecting operations even when the portion of the touchscreen 151 is deteriorated, and thus to prolong the life of the touchscreen 151.

Further, the procedure described above is merely an example, and the processing order shown in the flowchart in Fig. 8 may be changed as necessary.

Next, processing performed by the operation apparatus 16 when the user is not performing operation on the touchscreen 151, that is, during non-operation, is described with reference to Fig. 9. The processing may be performed regularly, or may be performed in response to a specific trigger such as being performed every time the image forming apparatus 100 is turned on.

### Step S21

First, the detection processor 161 detects a quantity of electricity when a user is not performing operation. Here, the detection processor 161 detects a resistance value of the touchscreen 151 (that is, at least one of a value of resistance between the two X electrodes or a value of resistance between the two Y electrodes) as the quantity of electricity upon non-operation.

### Step S22

The second comparison processor 164 compares the quantity of electricity detected when the user is not performing operation (here, the resistance value of the touchscreen 151) with a second reference quantity of electricity used as a reference for the quantity of electricity when the user is not performing operation (here, a reference resistance value). This enables the second comparison processor 164 to detect whether there is a deterioration in the touchscreen 151. Specifically, when a difference ΔR between the detected resistance value of the touchscreen 151 and the reference resistance value is less than or equal to a threshold, the second comparison processor 164 determines that the touchscreen is not deteriorated. On the other hand, when the difference ΔR exceeds the threshold, the second comparison processor 164 determines that the touchscreen 151 is deteriorated.

### Step S23

When a result of the comparison performed by the second comparison processor 164 shows that the touchscreen 151 is deteriorated (Step S23: Yes), the operation apparatus 16 performs the process of Step S24. On the other hand, when the result of the comparison performed by the second comparison processor 164 shows that the touchscreen 151 is not deteriorated (Step S23: No), the operation apparatus 16 terminates the processing.

### Step S24

The adjustment processor 163 adjusts the mode in which the detection processor 161 detects operations. Here, the adjustment processor 163 adjusts, according to the first adjustment example, the mode in which the detection processor 161 detects operations. This makes it possible to easily prevent a reduction in the accuracy in detecting operations even when the touchscreen 151 is deteriorated, and thus to prolong the life of the touchscreen 151.

Further, the procedure described above is merely an example, and the processing order shown in the flowchart in Fig. 9 may be changed as necessary.

### Modifications

In the present embodiment, a plurality of structural elements included in the operation apparatus 16 may be distributed to be provided to a plurality of housings. For example, the detection processor 161, the first comparison processor 162, the adjustment processor 163, and the second comparison processor 164 may be provided separately from each other.

Further, in the present embodiment, the detection processor 161, the first comparison processor 162, the adjustment processor 163, and the second comparison processor 164 may be implemented as a function of the controller 17. In this case, the controller 17 serves as the operation apparatus 16.

In the present embodiment, the touchscreen 151 is a resistive touchscreen, although the present disclosure is not limited thereto. For example, the touchscreen 151 may be a capacitive touchscreen. In this case, the detection processor 161, the first comparison processor 162, the adjustment processor 163, and the second comparison processor 164 may each perform various processes using capacitance as a quantity of electricity instead of using the voltage level.

In the present embodiment, the operation apparatus 16 is in a mode in which coordinates of an operation position on the touchscreen 151 is detected, although the present disclosure is not limited thereto. For example, the operation apparatus 16 may be in a mode in which only whether there is an operation on the touchscreen 151 is detected without detecting the coordinates of the operation position on the touchscreen 151. Such a mode may be adopted in, for example, the display apparatus 15 such as a touch switch only detecting whether the touchscreen 151 is touched. When the display apparatus 15 is a touch switch, the display apparatus 15 displays thereon an icon indicating a touch position. Then, when a deterioration in the touchscreen 151 is detected, the operation apparatus 16 can change the mode used to detect operations by, for example, changing a position of the icon.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An operation apparatus (16), comprising:
a detection processor (161) that detects a quantity of electricity that varies according to an operation received on a touchscreen (151), the detection processor (161) detecting the operation on a basis of the detected quantity of electricity; and
a first comparison processor (162) that compares the quantity of electricity detected during operation with a first reference quantity of electricity used as a reference for the quantity of electricity during operation.

2. The operation apparatus (16) according to claim 1, further comprising
an adjustment processor (163) that adjusts, according to a result of the comparison performed by the first comparison processor (162), a mode in which the detection processor (161) detects the operation.

3. The operation apparatus (16) according to claim 2, wherein
the quantity of electricity has the property of varying over time after the operation is received on the touchscreen (151),
the detection processor (161) detects the quantity of electricity obtained when a specific period of time (d1, d2) has elapsed since start of varying of the quantity of electricity, and
the adjustment processor (163) makes the specific period of time (d1, d2) longer when a difference (ΔV) between the detected quantity of electricity and the first reference quantity of electricity exceeds a threshold.

4. The operation apparatus (16) according to claim 2 or 3, wherein
on the basis of the quantity of electricity, the detection processor (161) detects coordinates that are situated on the touchscreen (151) and at which the operation is received, and
when a difference (ΔV) between the detected quantity of electricity and the first reference quantity of electricity exceeds a threshold, the adjustment processor (163) corrects at least one of the quantity of electricity or the first reference quantity of electricity to decrease the difference (ΔV).

5. The operation apparatus (16) according to any one of claims 2 to 4, wherein
when a difference (ΔV) between the quantity of electricity detected at specific coordinates (C1, C2) on the touchscreen (151) and the first reference quantity of electricity exceeds a threshold, the adjustment processor (163) changes a position of the specific coordinates (C1, C2).

6. The operation apparatus (16) according to claim 5, wherein
a display section (152) is arranged behind the touchscreen (151),
a specific receiving portion (11) that receives a specific operation is displayed at a position, on the display section (152), that corresponds to the specific coordinates (C1, C2), and
the adjustment processor (163) changes a position of the specific receiving portion (11) concurrently with the change in the position of the specific coordinates (C1, C2).

7. The operation apparatus (16) according to claim 6, wherein
the display section (152) includes a first non-display region (A1) in which a reception portion that receives the operation is not displayed on a screen that displays thereon the specific receiving portion (11), and
the adjustment processor (163) changes the position of the specific coordinates (C1, C2) to a position, on the touchscreen (151), that corresponds to the first non-display region (A1) and at which the difference (ΔV) is less than or equal to the threshold.

8. The operation apparatus (16) according to claim 6, wherein
the display section (152) is changeable for a plurality of screens,
the display section (152) includes a second non-display region (A2) in which a reception portion that receives the operation is not displayed on any of the plurality of screens, and
the adjustment processor (163) changes the position of the specific coordinates (C1, C2) to a position, on the touchscreen (151), that corresponds to the second non-display region (A2).

9. The operation apparatus (16) according to any one of claims 2 to 8, further comprising
a second comparison processor (164) that compares the quantity of electricity detected during non-operation with a second reference quantity of electricity used as a reference for the quantity of electricity during non-operation, wherein
according to a result of the comparison performed by the second comparison processor (164), the adjustment processor (163) adjusts the mode in which the detection processor (161) detects the operation.

10. A method for controlling an operation apparatus (16), comprising:
detecting a quantity of electricity that varies according to an operation received on a touchscreen (151);
detecting the operation on a basis of the detected quantity of electricity; and
comparing the quantity of electricity detected during operation with a first reference quantity of electricity used as a reference for the quantity of electricity during operation.
